# EUROPÄISCHE PATENTSCHRIFT

(11) **EP 2 753 576 B1**
(45) Veröffentlichungstag und Bekanntmachung des Hinweises auf die Patenterteilung: **03.02.2016**
(21) Anmeldenummer: 12780651.1
(22) Anmeldetag: 07.09.2012
(51) Int. Cl.: C01B 21/28, B01J 8/00

(54) **VORRICHTUNG ZUR BYPASS-MINDERUNG IN AMMONIAK-OXIDATIONSBRENNERN**
APPARATUS FOR MINIMIZING BYPASS IN AMMONIA OXIDATION BURNERS
DISPOSITIF POUR RÉDUIRE LE PHÉNOMÈNE DE BY-PASS DANS DES BRÛLEURS D'OXYDATION D'AMMONIAC

(30) Priorität: 09.09.2011 DE 102011112781
(43) Veröffentlichungstag der Anmeldung: 16.07.2014
(73) Patentinhaber: ThyssenKrupp Industrial Solutions AG, 45143 Essen (DE)
(72) Erfinder: FUCHS, Jürgen, 44139 Dortmund (DE)
(74) Vertreter: ThyssenKrupp Intellectual Property GmbH
(86) Internationale Anmeldenummer: PCT/EP2012/003764
(87) Internationale Veröffentlichungsnummer: WO 2013/034304

(56) Entgegenhaltungen:
- WO-A1-03/000400
- US-A1- 2004 234 433
- US-A1- 2006 110 302

## Beschreibung

Die Erfindung betrifft ein Dichtsystem eines Brennerkorbes in einem Ammoniak-Oxidationsbrenner und ein Verfahren zur Abdichtung eines Brennerkorbes in einem Ammoniak-Oxidationsbrenner.

Ein gatttungsgemäßes Dichtssystem sowie ein gattungsgemäßes Verfahren zur Abdichtung eines Brennerkorbes in einem Ammoniak-Oxidationsbrenner sind aus WO 03/000400 A1 bekannt.

Salpetersäure wird durch Reaktion von NO₂ mit Wasser und Sauerstoff (Luft) erzeugt, wobei NO₂ durch Oxidation von NO erhalten wird. Dabei wird das benötigte NO meist durch Oxidation von NH₃ in einem Ammoniak-Oxidationsbrenner hergestellt.

Als Katalysatoren werden z.B.Platin/Rhodium-Netze eingesetzt. Diese werden im Brenner evtl. in Kombination mit Fängersystemen eingesetzt und auf Trägermaterialien platziert, die sich in einem Brennerkorb befinden. Diese Trägermaterialien sind meist Raschig- oder Pallringe, Berl-, Interlox- oder Torussättel und /oder Interpackkörper mit Abmessungen von etwa 5 - 200 mm. Diese bestehen aus Steinzeug, Porzellan, Glas, Katalysatormaterialien oder Edelstahl und ruhen auf Tragrosten, die beispielsweise als Lochplatte ausgestaltet sein können, deren freier Querschnitt mindestens gleich oder größer als das relative Lückenvolumen der Füllkörper ist. Dabei bilden diese Tragroste eine gasdurchlässige Bodenplatte des Brennerkorbes. Auf den Tragrosten sind meist noch weitere Stützgewebe für die Trägermaterialien vorgesehen. Die Katalysatornetze werden ebenfalls meist zusammen mit weiteren Stützgeweben mittels Einspannvorrichtungen im Brennerkorb befestigt, um ein Verrutschen zu vermeiden.

Die Tragroste werden dabei häufig auf weiteren Einbauten, die sich noch im Ammoniak-Oxidationsbrenner befinden, lose aufgestellt, so dass es keinerlei mechanische Verbindung zwischen der Brennerkorbaußenwand und den Tragrosten gibt. Derartige weitere Einbauten sind meist deshalb vorhanden, da in der Praxis häufig mit einer Kombination aus NH₃-Verbrennungselementen und La Mont-Abhitzekesseln gearbeitet wird. Dies ist von Vorteil, da eine Zersetzung des gebildeten NO vermieden werden muss und somit eine schnelle Abkühlung des erzeugten Gasgemisches erreicht werden muss. Somit befinden sich meist Rohrschlangen zur Kühlung des Gasgemisches unterhalb des Brennerkorbes im Ammoniak-Oxidationsbrenner, auf denen die Tragroste flexibel gelagert werden können.

Die Reaktionstemperatur bei der Umsetzung von Ammoniak mit Luft zu Stickoxid und Wasserdampf liegt bei bis zu 950°C und es wird bei Drücken von bis zu 10 bar gearbeitet. Dies führt dazu, dass sich der Brennerkorb entsprechend ausdehnt.

Diese Ausdehnung erfolgt an Stellen, die mit Trägermaterialien bedeckt sind, also z.B. auf der gasdurchlässigen Bodenplatte, etwas zeitverzögert, da hier der Temperaturanstieg verzögert ist. Somit kommt es bei Konstruktionen von Brennerkörben, die aus einem Stück gefertigt sind, d.h. bei denen die Außenwand mit der gasdurchlässigen Bodenplatte mechanisch verbunden ist, zu einem hohen Verschleiß, da die Brennerkörbe vor allen Dingen beim An- und Abfahren hohen Wärmespannungen im Material ausgesetzt sind. Aus diesem Grund versucht man derartige Bauweisen zu vermeiden und legt die gasdurchlässige Bodenplatte lose auf vorhandene Konstruktionen im Ammoniak-Oxidationsbrenner auf.

Bei der losen Auflegung der gasdurchlässigen Bodenplatte auf im Reaktor vorhandene Einbauten entsteht aber zwischen der umlaufenden Wand des Brennerkorbes und der gasdurchlässigen Bodenplatte ein Spalt. Dies passiert sobald sich die Wand des Brennerkorbes und die gasdurchlässige Bodenplatte beginnen in unterschiedlichem Maße auszudehnen. Dies hat einen Gasschlupf zur Folge, so dass die nachgeschaltete Kühlung im La Mont-Abhitzekessel nicht sofort greifen kann und es somit mit hoher Wahrscheinlichkeit zu einer Zersetzung des erzeugten NO kommt.

Außerdem besteht die Gefahr, dass durch diesen Spalt das Trägermaterial für die Katalysatornetze hindurch fällt und das Trägermaterial somit nicht mehr seine Funktion der gleichmäßigen Stützung der Katalysatornetze ausüben kann. Die Schüttstruktur des Trägermaterials wird dadurch zerstört und es kommt zur Riss- und Muldenbildung in der Schüttung. Es ist bekannt dass derartige Phänomene mit einem Verlust an Verbrennungseffizienz und einem Ammoniakschlupf in Verbindung stehen. Ein Ammoniakschlupf ist aufgrund von Umweltgesichtspunkten dringlichst zu vermeiden und eine Verminderung der Verbrennungseffizienz wirkt sich auch auf die Effizienz des Gesamtverfahrens aus, so dass letztendlich weniger Salpetersäure produziert wird.

Es besteht also ein Bedarf die bestehenden Brennerkörbe weiter zu optimieren, um die aufgezeigten Probleme in Ammoniak-Oxidationsbrennern zu vermeiden.

Aufgabe der vorliegenden Erfindung ist es deshalb ein Dichtsystem eines Brennerkorbes in einem Ammoniak-Oxidationsbrenner, bei dem die Wand und die gasdurchlässige Bodenplatte nicht mechanisch miteinander verbunden sind, bereitzustellen, sodass die Nachteile der bislang eingesetzten, industriellen Varianten minimiert werden und ein Gasschlupf vermindert wird. Zudem soll ein Verlust an im Brennerkorb befindlichen Mitteln, wie Raschig-Ringen, minimiert werden. Damit soll eine Abdichtung zwischen dem gasdurchlässigen Boden und der Brennerkorbwand erzielt werden, welche die unterschiedlichen Wärmedehnungen in radialer und axialer Richtung überbrückt und minimale Kräfte auf die Wand und die Bodenplatte ausübt. Des Weiteren ist es Aufgabe der Erfindung ein entsprechendes Verfahren zur Verfügung zu stellen.

Die Aufgabe der Erfindung wird gelöst durch ein Dichtsystem eines Brennerkorbes in einem Ammoniak-Oxidationsbrenner, wobei der Brennerkorb eine Wand (1) aufweist, die im Ammoniak-Oxidationsbrenner verankert ist, und der Brennerkorb eine gasdurchlässige Bodenplatte (2) aufweist, die auf weiteren Einbauten des Ammoniak-Oxidationsbrenners platziert ist und die zur Aufnahme weiterer Mittel einen umlaufenden Rand (8) aufweist, wobei die Wand (1) und die gasdurchlässige Bodenplatte (2) nicht mechanisch miteinander verbunden sind, so dass zwischen der Wand (1) und dem umlaufenden Rand (8) der Bodenplatte (2) ein Spalt (7) vorhanden ist und wobei am umlaufenden Rand (8) der Bodenplatte (2) eine Randabdichtung (3), die sich aus einzelnen Segmenten zusammensetzt, über Führungsstifte (4) beweglich gelagert ist und die Randabdichtung (3) über den Spalt (7) zwischen dem umlaufenden Rand (8) der Bodenplatte (2) an die Wand (1) heranragt und an der Wand (1) anliegt.

Die Randabdichtung (3) besteht hierbei aus mehreren Einzelstücken (Segmenten), die am umlaufenden Rand (8) der Bodenplatte (2) über die Führungsstifte (4) beweglich gelagert werden. Dabei weisen die Einzelsegmente mit Vorteil eine Länge von 500 mm bis 1200 mm auf. Die segmentierte Randabdichtung wird rings um den Brennerkorb vorgesehen und ist beispielsweise als einzelne Bleche ausgestaltet. Dabei ist es möglich, dass sich die einzelnen Segmente der Randabdichtung (3) überlappen oder direkt aneinander anschließend angeordnet werden. Somit können auch variable Spaltbreiten, die sich an unterschiedlichen Stellen im Brennerkorb des Ammoniak-Oxidationsbrenner bilden, verlässlich abgedichtet werden.

Die Verankerung der Wand des Brennerkorbes im Ammoniak-Oxidationsbrenner kann derart erfolgen, dass der Brennerkorb in entsprechende Vorrichtungen im Ammoniak-Oxidationsbrenner eingehängt wird, oder beispielsweise auch, indem die Wand des Brennerkorbes über eine Flanschverbindung am Ammoniak-Oxidationsbrenner angebracht ist. Des Weiteren kann die Wand des Brennerkorbes auch am Ammoniak-Oxidationsbrenner angeschweißt sein. Die Ammoniak-Oxidationsbrenner weisen einen Durchmesser von 1,5 m und 7 m auf.

Die weiteren Einbauten können wie oben beschrieben Rohrschlangen eines sich ebenfalls im Ammoniak-Oxidationsbrenner befindlichen La Mont-Abhitzekessel sein. Aber auch andere Einbauten jeglicher Art, wie weitere Stützstrukturen können dazu verwendet werden, die gasdurchlässige Bodenplatte aufzunehmen. Dabei ist die Bodenplatte nicht mechanisch mit den weiteren Einbauten verbunden, sondern liegt lose auf.

Unter den weiteren Mitteln, die der Brennerkorb aufnehmen kann, sollen im Zuge dieser Erfindung beispielsweise Trägermaterialien, wie Rachig- oder Pallringe, Berl-, Interlox. oder Torussättel und/oder Interpackkörper mit Abmessungen von etwas 5 - 200 mm verstanden werden, die beispielhaft als Katalysatormaterialien dienen.

Unter einer beweglichen Lagerung wird im Zuge dieser Erfindung das Gegenteil von fest fixiert, was beispielsweise über eine Verschweißung oder Verschraubung zustände käme, verstanden. D.h. die bewegliche Führung der Randabdichtung stellt sicher, dass bei Ausdehnung des Brennerkorbes im Betrieb die Randabdichtung weiterhin die Wand des Brennerkorbes berührt, d.h. lose an der Wand anliegt, und somit eine Abdichtung sichergestellt ist. Die Randabdichtung ist also schwimmend, und somit beweglich, gelagert.

Mit Vorteil ist die Randabdichtung in einem Winkel von 2° bis 60° und bevorzugt von 15° bis 30°, gegenüber der Wand des Brennerkorbes angeordnet.

In Ausgestaltung der Erfindung ist die Randabdichtung die sich aus einzelnen Segmenten zusammensetzt, aus Blechen aufgebaut. Dabei werden die Einzelbleche, die die Segmente der Randabdichtung bilden rings um den Brennerkorb vorgesehen.

In bevorzugter Ausführung der Erfindung wird die Randabdichtung über Führungsstifte, die am äußeren umlaufenden Rand (8) der Bodenplatte vorgesehen sind, beweglich gelagert. Dies geschieht vorteilhaft, indem die Randabdichtung Öffnungen aufweist, die in die Führungsstifte ragen. Dabei können die Öffnungen der Randabdichtung jedwede Form aufweisen, die eine vertikale und/oder horizontale Bewegung der Randabdichtung ermöglicht und das Abdichten zwischen gasdurchlässiger Bodenplatte und der Wand des Brennerkorbes sicherstellt.

Bevorzugt handelt es sich bei der gasdurchlässigen Bodenplatte um einen Wabenrost, einen Netzboden, einen Siebboden, einen Gitterboden oder um ein Lochblech. Besonders bevorzugt wird dabei die Verwendung eines Wabenrostes, da diese Art von Ausführung der Bodenplatte den Bedingungen in einem Ammoniak-Oxidationsbrenner erfahrungsgemäß am Besten gerecht wird.

Des Weiteren umfasst die vorliegende Erfindung ein Verfahren zur Abdichtung eines Brennerkorbes in einem Ammoniak-Oxidationsbrenner gegenüber Gasschlupf und dem Verlust von im Brennerkorb enthaltenen Mitteln, wobei der Brennerkorb eine Wand (1) aufweist, die im Ammoniak-Oxidationsbrenner verankert wird, und der Brennerkorb eine gasdurchlässige Bodenplatte (2) aufweist, die auf weiteren Einbauten des Ammoniak-Oxidationsbrenners platziert wird und die zur Aufnahme weiterer Mittel einen umlaufenden Rand (8) aufweist, wobei die Wand (1) und die gasdurchlässige Bodenplatte (2) nicht mechanisch miteinander verbunden sind, so dass zwischen der Wand (1) und dem umlaufenden Rand (8) der Bodenplatte (2) eine Randabdichtung (3), die sich aus einzelnen Segmenten zusammensetzt, über Führungsstifte (4) beweglich gelagert ist und die Randabdichtung (3) über den Spalt (7) zwischen dem umlaufenden Rand (8) der Bodenplatte (2) an die Wand (1) heranragt und an der Wand (1) anliegt und die Randabdichtung (3) einen Winkel zur Wand (1) von 2° bis 60° aufweist, wobei der Winkel zur Wand bei einer Ausdehnung des Brennerkorbes verändert wird. Die Randabdichtung (3), die sich aus einzelnen Segmenten zusammensetzt, liegt hierbei an der Wand (1) an und dichtet somit den Spalt (7) zuverlässig über den gesamten Betriebsbereich des Korbes und den damit verbundenen, unterschiedlichen Ausdehnungen, ab.

In einer Ausgestaltung des erfindungsgemäßen Verfahrens wird der Winkel zur Wand bei einer Ausdehnung des Brennerkorbes vergrößert. Dies geschieht dadurch, dass sich beispielsweise beim Anfahren des Ammoniak-Oxidationsbrenners die Wand des Brennerkorbes und die gasdurchlässige Bodenplatte durch den Kontakt zu im Brennkorb befindlichen Mitteln, wie beispielsweise Raschig-Ringen, unterschiedlich schnell erhitzen und somit auch eine unterschiedlich starke Ausdehnung aufweisen. Erhitzt sich nun die gasdurchlässige Bodenplatte langsamer, als die Wand des Brennerkorbes, dann wird der Spalt zwischen diesen beiden Bauteilen größer. Durch die im Brennerkorb enthaltenen Mittel wird die Randdichtung in diesem Fall nach unten gedrückt und der Winkel zur Wand vergrößert sich.

In bevorzugter Ausführung des Verfahrens wird die bewegliche Lagerung der Randabdichtung (3) über Führungsstifte, die in Öffnungen der Randabdichtung (3) ragen und die am äußeren Randbereich der Bodenplatte (2) am umlaufenden Rand (8) vorgesehen sind, erreicht.

Als Randabdichtung (3), die sich aus einzelnen Segmenten zusammensetzt, werden bevorzugt Bleche verwendet.

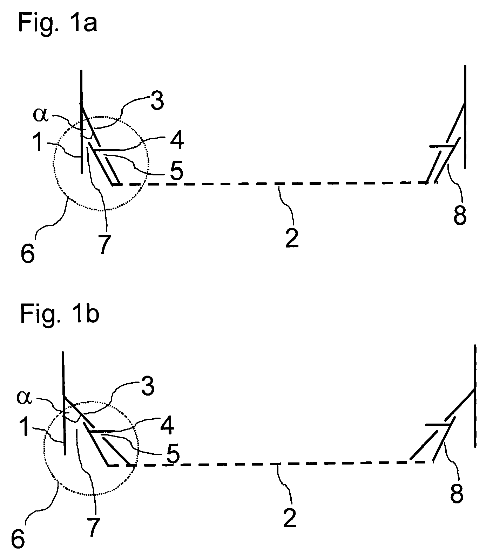

Die vorliegende Erfindung soll nachfolgend anhand der Fig. 1a und Fig. 1b näher erläutert werden.
- Fig. 1a: Schematische Skizze eines Brennerkorbes mit erfindungsgemäßem Dichtsystem in kaltem Zustand.
- Fig. 1b: Schematische Skizze eines Brennerkorbes mit erfindungsgemäßem Dichtsystem in einem Zustand, in dem eine Abdichtwirkung wünschenswert ist.

Fig. 1a stellt schematisch ein erfindungsgemäßes Abdichtsystem in kaltem Zustand dar. Gezeigt ist eine gasdurchlässige Bodenplatte 2, die einen Rand 8 aufweist, und eine Wand 1, die zylinderförmig ausgestaltet ist. Die gasdurchlässige Bodenplatte 2 und die Wand 1 sind nicht mechanisch miteinander verbunden, sondern werden an weiteren Einbauten des Ammoniak-Oxidationsbrenners eingehängt, befestigt oder lose aufgestellt (nicht gezeigt). In Fig. 1a ist beispielhaft eine bewegliche Lagerung der Randabdichtung 3 im äußeren Randbereich 6 der gasdurchlässigen Bodenplatte über Führungsstifte 4 gezeigt. Dazu weist die Randabdichtung 3 Öffnungen 5 auf, die lose über die Führungsstifte 4 gesteckt sind und die in vertikaler Richtung über die Bodenplatte 2 hinausragen und die Wand 1 berühren. Dabei ist die Randabdichtung 3 in einem Winkel α von 2° bis 60° gegenüber der Wand 1 angeordnet, wodurch eine Dichtwirkung gegenüber Gasen und eventuell auf der gasdurchlässigen Bodenplatte 2 gelagertem Trägermaterial für Katalysatornetze erzielt wird (nicht gezeigt).

Fig. 1b zeigt die gasdurchlässige Bodenplatte in nahezu unverändertem Zustand im Vergleich zu Fig. 1 a. Allerdings ist in Fig. 1b die Wand 1 des Brennerkorbes im Vergleich zu Fig. 1a in ausgedehntem Zustand gezeigt, so dass sich der Durchmesser der Wand des Brennerkorbes vergrößert hat. Dies geschieht beispielsweise beim Anfahrvorgang des Ammoniak-Oxidationsbrenners, wenn die Temperaturverteilung im Brenner, bedingt durch Einbauten oder auch durch auf der gasdurchlässigen Bodenplatte 2 befindlichem Trägermaterial für Katalysatornetze (nicht gezeigt), ungleichmäßig ist und sich somit die einzelnen Bauteile ungleichmäßig stark ausdehnen. Dies führt somit zwangsläufig zu einer Vergrößerung des Spaltes 7 zwischen der gasdurchlässigen Bodenplatte 2 und der Wand 1. Die beweglich gelagerte Randabdichtung 3 verhindert nun, dass diese Vergrößerung des Spaltes 7 zu einem Gasschlupf oder zu einem Durchrutschen von eventuell auf der gasdurchlässigen Trägerplatte 2 befindlichem Trägermaterial für Katalysatornetze (nicht gezeigt) führt. Dabei vergrößert sich der Winkel α und der Spalt 7 wird erfindungsgemäß abgedichtet.

Vorteile, die sich aus der Erfindung ergeben, sind:
- Abdichtung gegenüber einem Gasschlupf von NO-Produktgasen, die somit direkt über die gasdurchlässige Bodenplatte einer Abkühlung unterzogen werden können und eine Zersetzung des NOs weitestgehend unterbunden wird.
- Abdichtung gegenüber auf der gasdurchlässigen Bodenplatte gelagerten Trägermaterialien für Katalysatornetze. Damit wird eine Erhaltung der Schüttstruktur dieser Trägermaterialien sichergestellt und somit eine Riß- und Muldenbildung, durch die es ebenfalls zum Gasschlupf, z.B. von Ammoniak, kommen kann.

### Bezugszeichenliste:

- 1: Wand
- 2: gasdurchlässige Bodenplatte
- 3: Randabdichtung
- 4: Führungsstift
- 5: Öffnung
- 6: äußerer Randbereich der gasdurchlässigen Bodenplatte
- 7: Spalt
- 8: umlaufender Rand der Bodenplatte

## Patentansprüche

1. Dichtsystem eines Brennerkorbes in einem Ammoniak-Oxidationsbrenner, wobei der Brennerkorb eine Wand (1) aufweist, die im Ammoniak-Oxidationsbrenner verankert ist, und der Brennerkorb eine gasdurchlässige Bodenplatte (2) aufweist, die auf weiteren Einbauten des Ammoniak-Oxidationsbrenners platziert ist und die zur Aufnahme weiterer Mittel einen umlaufenden Rand (8) aufweist, wobei die Wand (1) und die gasdurchlässige Bodenplatte (2) nicht mechanisch miteinander verbunden sind, so dass zwischen der Wand (1) und dem umlaufenden Rand (8) der Bodenplatte (2) ein Spalt (7) vorhanden ist,
**dadurch gekennzeichnet, dass**
am umlaufenden Rand (8) der Bodenplatte (2) eine Randabdichtung (3), die sich aus einzelnen Segmenten zusammensetzt, über Führungsstifte (4) beweglich gelagert ist und die Randabdichtung (3) über den Spalt (7) zwischen dem umlaufenden Rand (8) der Bodenplatte an die Wand (1) heranragt und an der Wand (1) anliegt.

2. Dichtsystem nach Anspruch 1, **dadurch gekennzeichnet, dass** die Randabdichtung (3) in einem Winkel von 2° bis 60° und bevorzugt von 15° bis 30°, gegenüber der Wand (1) angeordnet ist.

3. Dichtsystem nach einem der Ansprüche 1 oder 2, **dadurch gekennzeichnet, dass** die Randabdichtung (3), die sich aus einzelnen Segmenten zusammensetzt, aus Blechen aufgebaut ist..

4. Dichtsystem nach einem der vorstehenden Ansprüche, **dadurch gekennzeichnet, dass** die Randabdichtung (3) Öffnungen (5) aufweist, in die die Führungsstifte (4) ragen.

5. Dichtsystem nach Anspruch 4, **dadurch gekennzeichnet, dass** die Öffnung (5) der Randabdichtung (3) jedwede Form aufweist, die eine vertikale und/oder horizontale Bewegung der Randabdichtung ermöglicht.

6. Dichtsystem nach einem der vorstehenden Ansprüche, **dadurch gekennzeichnet, dass** die gasdurchlässige Bodenplatte ein Wabenrost, ein Netzboden, ein Siebboden, ein Gitterboden oder ein Lochblech ist.

7. Verfahren zur Abdichtung eines Brennerkorbes in einem Ammoniak-Oxidationsbrenner gegenüber Gasschlupf und dem Verlust von im Brennerkorb enthaltenen Mitteln, wobei der Brennerkorb eine Wand (1) aufweist, die im Ammoniak-Oxidationsbrenner verankert wird, und der Brennerkorb eine gasdurchlässige Bodenplatte (2) aufweist, die auf weiteren Einbauten des Ammmoniak-Oxidationsbrenners platziert wird und die zur Aufnahme weiterer Mittel einen umlaufenden Rand (8) aufweist, wobei die Wand (1) und die gasdurchlässige Bodenplatte (2) nicht mechanisch miteinander verbunden sind, so dass zwischen der Wand (1) und dem umlaufenden Rand (8) der Bodenplatte ein Spalt (7) vorhanden ist,
**dadurch gekennzeichnet, dass**
am umlaufenden Rand (8) der Bodenplatte (2) eine Randabdichtung (3), die sich aus einzelnen Segmenten zusammensetzt, über Führungsstifte (4) beweglich gelagert ist und die Randabdichtung (3) über den Spalt (7) zwischen dem umlaufenden Rand (8) der Bodenplatte (2) an die Wand (1) heranragt und an der Wand (1) anliegt und die Randabdichtung (3) einen Winkel zur Wand (1) von 2° bis 60° aufweist, wobei der Winkel zur Wand bei einer Ausdehnung des Brennerkorbes verändert wird.

8. Verfahren zur Abdichtung eines Brennerkorbes nach Anspruch 7, **dadurch gekennzeichnet, dass** der Winkel zur Wand bei einer Ausdehnung des Brennerkorbes vergrößert wird.

9. Verfahren zur Abdichtung eines Brennerkorbes nach einem der Ansprüche 7 oder 8, **dadurch gekennzeichnet, dass** als Randabdichtung (3), die sich aus einzelnen Segmenten zusammensetzt, Bleche verwendet werden.

## Claims

1. Sealing system of a burner basket in an ammonia oxidation burner, where the burner basket has a wall (1) which is anchored in the ammonia oxidation burner and the burner basket has a gas-permeable bottom plate (2) which is placed on further internals of the ammonia oxidation burner and has a circumferential border (8) for accommodating further media, where the wall (1) and the gas-permeable bottom plate (2) are not mechanically joined to one another, so that a gap (7) is present between the wall (1) and the circumferential border (8) of the bottom plate (2), **characterized in that** a border seal (3) which is made up of individual segments is moveably mounted by means of guide pins (4) at the circumferential border (8) of the bottom plate (2) and the border seal (3) projects over the gap (7) between the circumferential border (8) of the bottom plate to the wall (1) and contacts the wall (1).

2. Sealing system according to Claim 1, **characterized in that** the border seal (3) is arranged at an angle of from 2° to 60° and preferably from 15° to 30° relative to the wall (1).

3. Sealing system according to either Claim 1 or 2, **characterized in that** the border seal (3) which is made up of individual segments is made of metal sheets.

4. Sealing system according to any of the preceding claims, **characterized in that** the border seal (3) has openings (5) into which the guide pins (4) project.

5. Sealing system according to Claim 4, **characterized in that** the opening (5) of the border seal (3) has any shape which allows vertical and/or horizontal movement of the border seal.

6. Sealing system according to any of the preceding claims, **characterized in that** the gas-permeable bottom plate is a honeycomb grating, a mesh plate, a sieve plate, a grid or a perforated plate.

7. Method of sealing a burner basket in an ammonia oxidation burner against bypass of gas and loss of media present in the burner basket, where the burner basket has a wall (1) which is anchored in the ammonia oxidation burner and the burner basket has a gas-permeable bottom plate (2) which is placed on further internals of the ammonia oxidation burner and has a circumferential border (8) for accommodating further media, where the wall (1) and the gas-permeable bottom plate (2) are not mechanically joined to one another, so that a gap (7) is present between the wall (1) and the circumferential border (8) of the bottom plate, **characterized in that** a border seal (3) which is made up of individual segments is moveably mounted by means of guide pins (4) at the circumferential border (8) of the bottom plate (2) and the border seal (3) projects over the gap (7) between the circumferential border (8) of the bottom plate (2) to the wall (1) and contacts the wall (1) and the border seal (3) is at an angle to the wall (1) of from 2° to 60° and the angle to the wall is changed when the burner basket expands.

8. Method for sealing a burner basket according to Claim 7, **characterized in that** the angle to the wall is increased when the burner basket expands.

9. Method for sealing a burner basket according to either Claim 7 or 8, **characterized in that** metal sheets are used as border seal (3) which is made up of individual segments.

## Revendications

1. Système d'étanchéité d'un panier de brûleur dans un brûleur à oxydation d'ammoniac, dans lequel le panier de brûleur présente une paroi (1), qui est ancrée dans le brûleur à oxydation d'ammoniac, et le panier de brûleur présente une plaque de fond (2) perméable au gaz, qui est placée sur d'autres éléments du brûleur à oxydation d'ammoniac et qui présente un bord périphérique (8) pour la réception d'autres agents, dans lequel la paroi (1) et la plaque de fond (2) perméable au gaz ne sont pas assemblées mécaniquement l'une à l'autre, de telle manière qu'il existe une fente (7) entre la paroi (1) et le bord périphérique (8) de la plaque de fond (2), **caractérisé en ce qu'**un joint d'étanchéité de bord (3), qui se compose de segments individuels, est monté sur le bord périphérique (8) de la plaque de fond (2) d'une façon mobile au moyen de tiges de guidage (4) et le joint d'étanchéité de bord (3) s'étend au-dessus de la fente (7) entre le bord périphérique (8) de la plaque de fond jusqu'à la paroi (1) et s'applique sur la paroi (1).

2. Système d'étanchéité selon la revendication 1, **caractérisé en ce que** le joint d'étanchéité de bord (3) est agencé sous un angle de 2° à 60°, et de préférence de 15° à 30°, par rapport à la paroi (1).

3. Système d'étanchéité selon une des revendications 1 ou 2, **caractérisé en ce que** le joint d'étanchéité de bord (3), qui se compose de segments individuels, est constitué de tôles.

4. Système d'étanchéité selon l'une quelconque des revendications précédentes, **caractérisé en ce que** le joint d'étanchéité de bord (3) présente des ouvertures (5), dans lesquelles les tiges de guidage (4) s'engagent.

5. Système d'étanchéité selon la revendication 4, **caractérisé en ce que** l'ouverture (5) du joint d'étanchéité de bord (3) présente toute forme, qui permet un mouvement vertical et/ou horizontal du joint d'étanchéité de bord.

6. Système d'étanchéité selon l'une quelconque des revendications précédentes, **caractérisé en ce que** la plaque de fond perméable au gaz est une grille en nid d'abeilles, un fond en treillis, un fond en tamis, un fond en grille ou une tôle perforée.

7. Procédé pour protéger de façon étanche un panier de brûleur dans un brûleur à oxydation d'ammoniac contre une fuite de gaz et la perte d'agents contenus dans le panier de brûleur, dans lequel le panier de brûleur présente une paroi (1), qui est ancrée dans le brûleur à oxydation d'ammoniac, et le panier de brûleur présente une plaque de fond (2) perméable au gaz, qui est placée sur d'autres éléments du brûleur à oxydation d'ammoniac et qui présente un bord périphérique (8) pour la réception d'autres agents, dans lequel la paroi (1) et la plaque de fond (2) perméable au gaz ne sont pas assemblées mécaniquement l'une à l'autre, de telle manière qu'il existe une fente (7) entre la paroi (1) et le bord périphérique (8) de la plaque de fond, **caractérisé en ce qu'**un joint d'étanchéité de bord (3), qui se compose de segments individuels, est monté sur le bord périphérique (8) de la plaque de fond (2) d'une façon mobile au moyen de tiges de guidage (4) et le joint d'étanchéité de bord (3) s'étend au-dessus de la fente (7) entre le bord périphérique (8) de la plaque de base (2) jusqu'à la paroi (1) et s'applique sur la paroi (1) et le joint d'étanchéité de bord (3) présente un angle de 2° à 60° par rapport à la paroi, dans lequel l'angle par rapport à la paroi varie lors d'une dilatation du panier de brûleur.

8. Procédé pour protéger de façon étanche un panier de brûleur selon la revendication 7, **caractérisé en ce que** l'angle par rapport à la paroi augmente lors d'une dilatation du panier de brûleur.

9. Procédé pour protéger de façon étanche un panier de brûleur selon une des revendications 7 ou 8, **caractérisé en ce que** l'on utilise des tôles comme joint d'étanchéité de bord (3), qui se compose de segments individuels.
